# EUROPEAN PATENT SPECIFICATION

(11) **EP 2 497 625 B1**
(45) Date of publication and mention of the grant of the patent: **07.08.2019**
(21) Application number: 10828337.5
(22) Date of filing: 05.11.2010
(51) Int. Cl.: B29C 70/16, B29B 11/16, B29C 70/10, F02C 7/00, B29K 101/10, B29K 105/08, B29L 23/00, B29C 70/32, B29C 53/56

(54) **CYLINDRICAL STRUCTURE AND METHOD FOR MANUFACTURING THE SAME**
ZYLINDERFÖRMIGE STRUKTUR UND HERSTELLUNGSVERFAHREN DAVON
STRUCTURE CYLINDRIQUE ET PROCÉDÉ DE FABRICATION DE CELLE-CI

(30) Priority: 06.11.2009 JP 2009255303
(43) Date of publication of application: 12.09.2012
(73) Proprietor: IHI Corporation, Tokyo 135-8710 (JP); IHI Aerospace Co., Ltd., Koto-Ku Tokyo 135-0061 (JP)
(72) Inventor: HARADA, Takashi, Tokyo 135-0061 (JP); SHIGENARI, Yu, Tokyo 135-0061 (JP); MIYASHITA, Masayori, Tokyo 135-0061 (JP); MURAKAMI, Tsutomu, Tokyo 135-8710 (JP); TANAKA, Agamu, Tokyo 135-8710 (JP)
(74) Representative: Carpmael, Robert Maurice Charles
(86) International application number: PCT/JP2010/069680
(87) International publication number: WO 2011/055778

(56) References cited:
- WO-A1-94/13992
- JP-A- 4 201 240
- JP-A- 61 043 537
- JP-A- 63 053 019
- JP-A- 2007 015 203
- JP-A- 2008 221 724
- JP-A- 2009 107 337
- US-A- 3 490 983

## Description

### TECHNICAL FIELD

The present invention relates to a propulsion system in the aerospace field, or more specifically, to a cylindrical structure made of fiber-reinforced plastics such as a fan case of a jet engine or a motor case of a rocket engine, and to a method for manufacturing the same.

### BACKGROUND ART

In a jet engine for an airplane, as an example, outside air is taken in by a fan, compressed by a compressor and then used inside a combustor for combustion of fuel. After a part of generated energy is extracted by a turbine, the combustion gas is discharged backward from a nozzle located behind the engine. The entire jet engine is usually covered with and supported by an aerodynamically designed housing called a nacelle. The nacelle is huge as a whole and includes portions which are different in required properties such as strength. Accordingly, the nacelle is typically manufactured by being divided into multiple cowl components including a fan case, a core cowl, and the like. Each of the cowl components is optimally designed in accordance with the properties and the aerodynamic shape required therein.

In the case of the fan case, for example, it is not always necessary to use metal because heat resistance of the fan case is not required. Therefore, use of fiber-reinforced plastics instead of metal as a material of the fan case is being studied for the purpose of weight saving. A related technique is disclosed in US Patent Application Publication No. 2009/0098337. According to this technique, a preform is formed by winding a fabric made of fibers around a cylindrical tool and the fan case is manufactured from the preform.

On the other hand, an important property for the fan case is an impact energy absorbing capacity. For example, in case a component inside gets broken and hits the fan case at high speed, the component may further destroy other structural components if the component penetrates to the outside at the high speed. Therefore, the fan case needs to prevent such a component from penetrating to the outside or to adequately absorb kinetic energy thereof.

### SUMMARY OF THE INVENTION

The above-described related art requires a fabric having a width large enough for the length in the longitudinal direction of a fan case. Fan cases are extremely large both in the circumferential direction and in the axial direction due to the necessity to cover entire fans, many of which are in enormous scales. Such a wide fiber-reinforced fabric is extremely difficult to obtain and is expensive as well. Inevitably, the fan case has no choice but to be divided into separate components, which are manufactured and then joined together, or to have an internal structure containing discontinuity of fibers. However, when a high speed moving component hits such a joining region or a discontinued region of fibers, the region may get penetrated easily by the component or fails to sufficiently absorb kinetic energy. That is to say, there is a need for a technique of manufacturing a cylindrical structure such as a fan case or a motor case provided with a sufficient impact energy absorbing capacity by using relatively narrow fabrics. The present invention has been made from this viewpoint.

US3490983 discloses a fibre reinforced structure formed by spirally winding adjacent fabric tapes in one layer, so that successive turns abut each other on a spiral line, and then another such tape layer wound spirally from the other end, so that the turns of one layer overlap the turns of the other layer. Further double layers may be wound over this, with intervening roving layers.

The invention is in the method of claim 1 and the structure of claim 6.

### BRIEF DESCRIPTION OF THE DRAWINGS

Fig. 1 is a schematic perspective view of an apparatus used for a manufacturing method according to an embodiment of the present invention, which shows a first stage of the manufacturing method.
Fig. 2 is another perspective view of the apparatus showing a second stage of the manufacturing method.
Fig. 3 is a perspective view showing a state after winding is completed.
Fig. 4 is a perspective view showing a step of winding roving.
Fig. 5 is a schematic perspective view of the apparatus including a roving supply device.
Fig. 6 is a side view of a winding device included in the apparatus, which shows a cross section of a mandrel.
Fig. 7 is a schematic elevational view of a jet engine including a fan case manufactured in accordance with the manufacturing method.
Fig. 8 is an example of a cross section taken along an axial direction of a product manufactured in accordance with the manufacturing method.
Fig. 9 is a view for schematically explaining an impact test.

### MODES FOR CARRYING OUT THE INVENTION

An embodiment of the present invention will be described below with reference to the drawings.

For the convenience of explanation, directions indicated as L and R in the drawings will be expressed respectively as a left direction and a right direction while directions indicated as FR and FF will be expressed respectively as a rear direction and a front direction. However, these expressions are not limitative to the present invention.

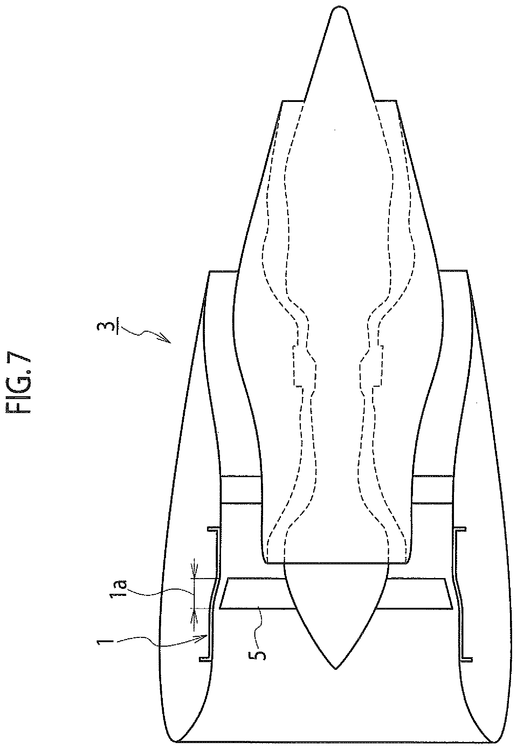

A manufacturing method according to this embodiment is applicable to manufacture of a fan case of a jet engine for an airplane shown in Fig. 7 as an example. An engine 3 generally includes an engine body provided with a fan blade 5, and a nacelle for covering and supporting the engine body. The nacelle is formed of multiple cowl components. Each cowl component is substantially symmetrical about an axis. Among the cowl components, a component covering the fan blade 5 is a fan case 1. The fan case 1 has a shape substantially approximate to a cylindrical shape which is, however, a non-simple cylindrical shape designed from an aerodynamic perspective. In the example of Fig. 7, the fan case 1 is formed into a gently tapered shape at a region la close to the fan 5 and into straight cylindrical shapes at other regions, and is provided with flange portions at both ends in an axial direction. Naturally, this embodiment is also applicable to other shapes.

The fan case 1 is made of appropriate fiber-reinforced plastics and is manufactured by forming fibers into a shape and curing resin with the fibers as will be described further in detail below. The fibers are preferably carbon fibers, aramid fibers, glass fibers or a composite of one or more of the above, for example. However, the fibers are not necessarily limited to the foregoing. The resin is preferably thermosetting resin, for instance, and epoxy resin, phenol resin, and polyimide resin can be exemplified in particular. However, the resin is not necessarily limited to the foregoing.

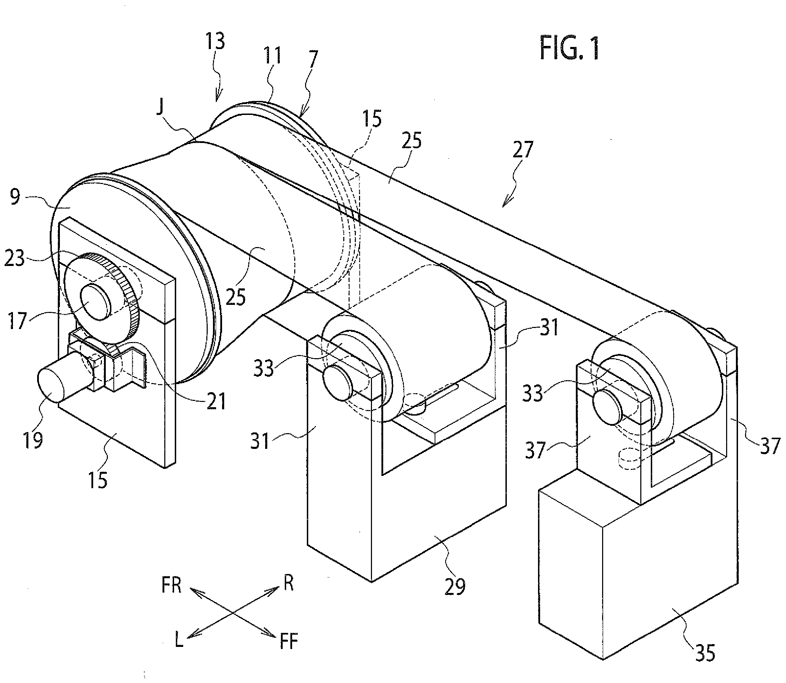

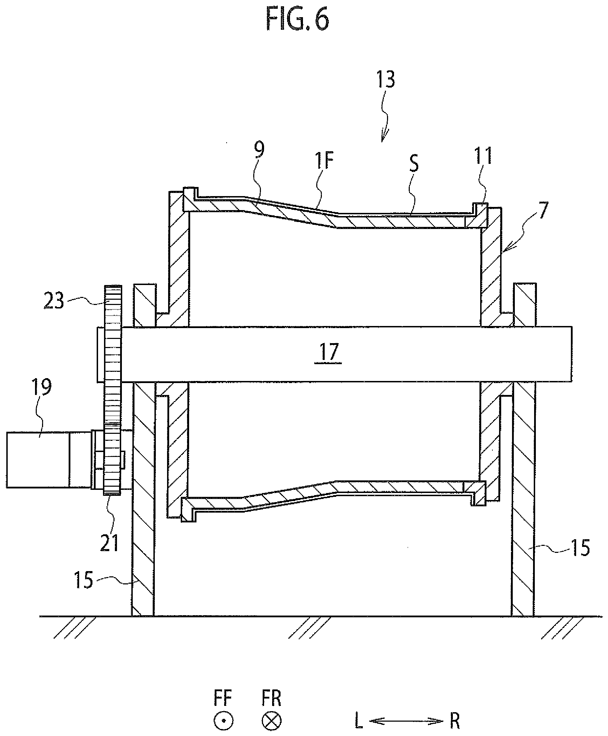

The fibers are formed into a shape by a manufacturing apparatus shown as an example in Fig. 1 to Fig. 6, thereby constituting a preform IF of the fan case 1. Referring to Fig. 6, the manufacturing apparatus includes a winding device 13. The winding device 13 includes a mandrel 7. The mandrel 7 is supported by a rotating shaft 17 which is rotatably supported by supports 15. The winding device 13 also includes a motor 19. The motor 19 is connected to a main drive gear 21 and the main drive gear 21 is drivably engaged with a driven gear 23 which is connected to the rotating shaft 17. Thus the mandrel 7 is rotated around the axis by driving of the motor 19. The supports 15 preferably have a structure such as a vertically separable structure which facilitates attachment and detachment of the mandrel 7.

The mandrel 7 has a peripheral surface S with a contour adaptable to the shape of the fan case 1. The fibers are wound around the mandrel 7 and thereby formed into the shape of the fan case 1. Meanwhile, the mandrel 7 can be separated into a body 9 and a flange 11 so that the formed fibers can be taken out by separation.

Referring to Fig. 1, the manufacturing apparatus includes a supply device 27 for supplying the fibers to the winding device 13. The supply device 27 includes multiple mounts 29 and 35. Each mount includes a spool 33 for storing the fibers, and a support 31 (or 37) for rotatably supporting the spool 33. The support 31 (or 37) preferably has a structure such as a vertically separable structure which facilitates attachment and detachment of the spool 33. Moreover, the support 31 (or 37) preferably has a structure which can change the width thereof so that the support 31 (or 37) can attach spools having various widths. In addition, the first mount 29 and the second mount 35 preferably establish a positional relationship such that the fibers respectively supplied therefrom do not interfere with one another.

The fibers are supplied in the form of fabric. The fabric is preferably a non-crimp fabric. Not being defined as having a meaning different from a standard one known to those skilled in the art, the non-crimp fabric means a fabric woven such that main fibers do not intersect one another. Alternatively, it is also possible to use any of a plain fabric, a twilled fabric, and a bias fabric instead of the non-crimp fabric. Moreover, it is also possible to use a combination of two or more of the above instead.

The fan case 1 may include fibers in the form of roving in addition to the fibers in the form of the fabric. Not being defined as having a meaning different from a standard one known to those skilled in the art, the roving means a bundle of multiple fibers each of which is not twisted at-all or slightly twisted.

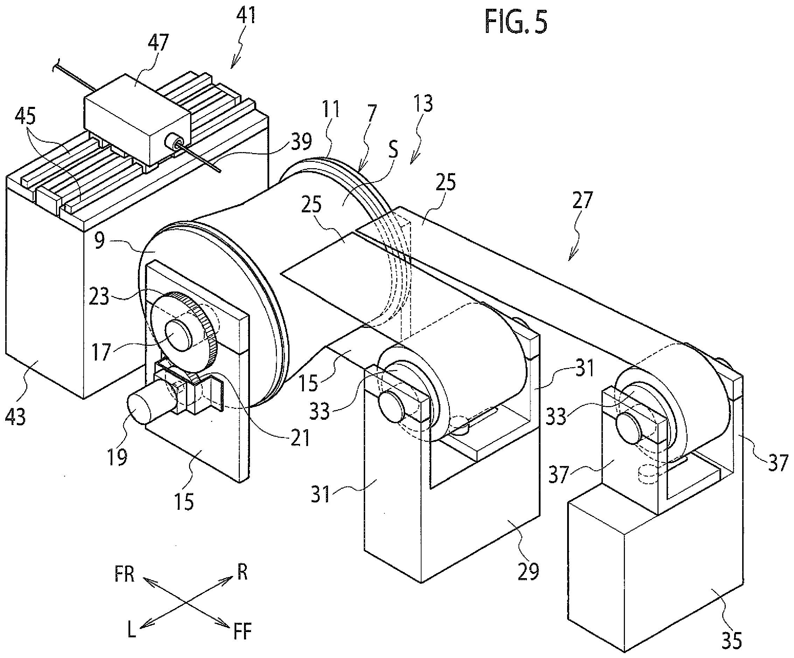

As shown as an example in Fig. 5, the manufacturing apparatus may further include a roving supply device 41 in order to incorporate the roving into the preform 1F. The roving supply device 41 is disposed on an opposite side of the supply device 27 with respect to the winding device 13, for example.

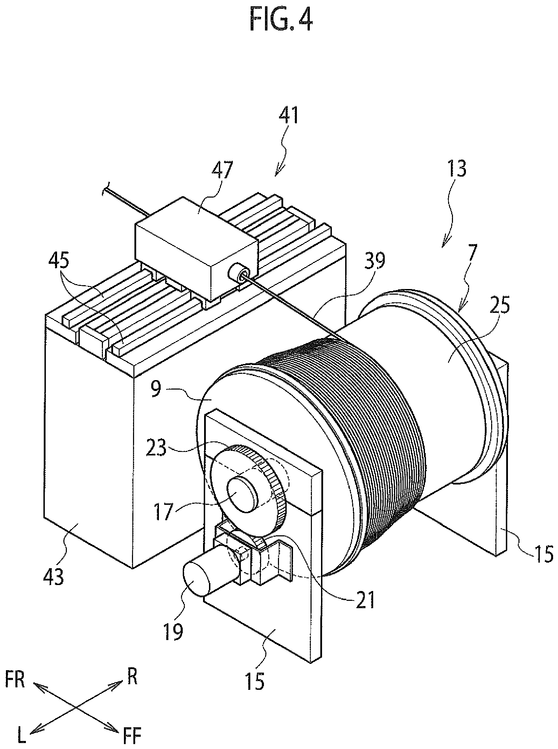

As shown in Fig. 4, the roving supply device 41 includes a mount 43, guide rails 45 installed on the mount 43, and a head 47 which is guided by the guide rails and is movable in the width direction. Although it is not illustrated in the drawing, the head 47 moves in the width direction while being driven by an actuator. The head 47 includes a guide way configured to guide the roving as illustrated in the drawing, guides the roving 39 to an appropriate position, and supplies the roving 39 to the winding device 13.

The fibers are formed into the shape as described below by using the aforementioned manufacturing apparatus.

Referring to Fig. 1, fabrics 25 in a rolled state having mutually different widths are attached to the spool 33 on the first mount 29 and to the spool 33 on the second mount 35, respectively. Alternatively, the widths of the fabrics 25 may be equal to each other. In any case, a total width of the two fabrics 25 is equal to an axial length of the fan case 1. Meanwhile, the total width may be set longer than the axial length and then fitted to the axial length by cutting both ends after the shape is formed. Preferably, the fabrics 25 are supplied in the form of so-called prepreg being impregnated with resin in advance. However, the resin may be impregnated afterward.

Each of the- fabrics 25 is drawn out of the spool 33 and one end thereof is attached to the peripheral surface S of the mandrel 7. Here, the fabrics 25 are arranged in parallel while bringing their edges into contact with each other. Then, the mandrel 7 is rotated one revolution or more by driving of the motor 19 and the fabrics 25 are wound around the mandrel 7 while maintaining the contact between the edges . On the first layer formed in this process, the edges of the fabrics 25 in contact with each other form a join line J that extends in the circumferential direction. On the join line J, the fabrics 25 may slightly overlap each other.

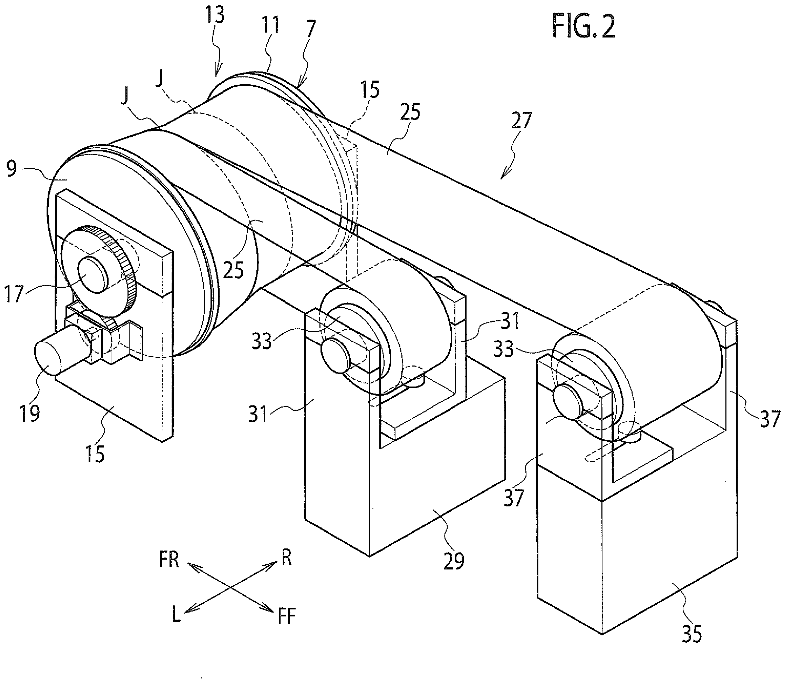

Next, referring to Fig. 2, fabrics 25 having a different width combination from those described above are respectively attached to the spools 33. The fabrics 25 are wound around the first layer in a similar manner to the above while bringing their edges into contact with each other. Due to the different width combination, a join line J on this layer is displaced in the axial direction from the join line J on the first layer.

Further, fabrics 25 having a different width combination from any of those described above are wound around the foregoing two layers by a similar procedure to the above. Due to the different width combination, a join line J on this layer is displaced in the axial direction from both of the join line J on the first layer and the join line J on the second layer.

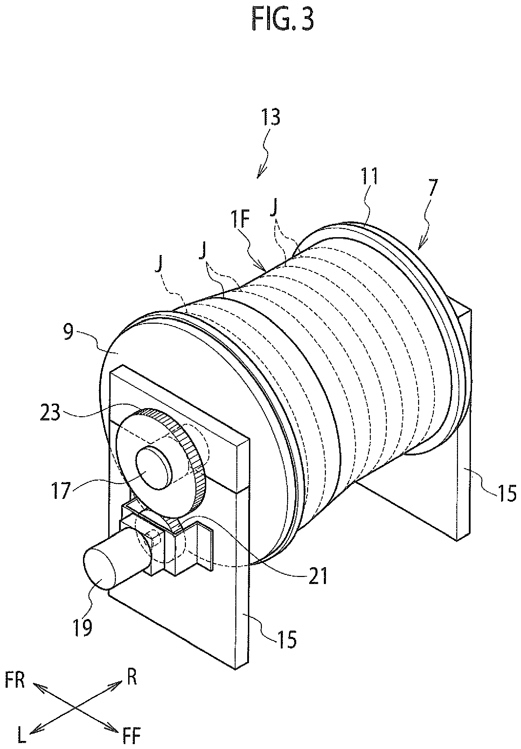

If necessary, similar procedures to the above are repeated so as to laminate more layers having join lines J displaced from the join lines J of any of the aforementioned layers. The number of the layers to be thus laminated may be set arbitrarily within a range equal to or above 3. As shown in Fig. 3, in the preform 1F, the join line J on each of the layers is displaced in the axial direction from the join lines J on any other layers.

If necessary, the roving 39 may be wound around the mandrel 7 or any of the layers as shown in Fig. 4 in any of the above-mentioned steps. Preferably, the roving 39 is supplied in the form of so-called prepreg impregnated with resin in advance as similar to the fabrics 25. However, the resin may be impregnated afterward.

The roving is wound as described below, for example. First, the head 47 is located in alignment with one end of the mandrel 7 or any of the layers, and an end of the roving 39 is attached the one end. Subsequently, the roving 39 is wound around the mandrel 7 or any of the layers in such a manner as to form a helix by continuously rotating the mandrel 7 and moving the head 47 to another end. The helix is preferably formed dense without gaps. By performing this step, the roving 39 can be located in at least any one of positions on an inner surface of the first layer, between any two of the layers, or on an outer surface of the outermost layer. Meanwhile, the roving 39 may form multiple layers exceeding one layer.

In the above description, the fabric or the roving is wound by rotating the mandrel. Instead, the spool or the roving supply device may be revolved around the fixed mandrel. Such a method can be implemented, for example, by setting the mandrel upright and installing a unit to revolve the device around the mandrel.

After the above-described steps, the preform IF is detached from the supports 15 together with the mandrel 7. When the fabrics 25 and the roving 39 are not impregnated with the resin in advance, the preform IF is impregnated with the resin at this point by injecting the resin from outside. Alternatively, the entire preform 1F may be dipped into the resin so as to achieve the resin impregnation.

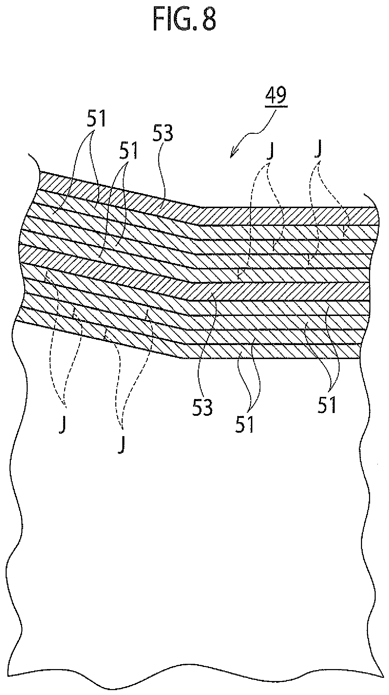

The preform IF is heated in the state of still being wound around the mandrel 7. Preferably, an appropriate heating furnace is used. The heating may be conducted by a furnace such as an autoclave in combination with appropriate pressurization. The resin is cured by heating and the layers and the roving are joined together by the resin, whereby a fan case 49 made of the fiber-reinforced plastics is obtained. An appropriate finishing process is carried out when required. As shown in Fig. 8, in the fan case 49, a join line J on each of layers 51 is displaced in the axial direction from join lines J on any other layers. As can be understood from the above description, the fan case 49 may include a layer 53 formed of the roving in one or more positions on the inner surface of the innermost layer, between any two of the layers, and on the outer surface of the outermost layer.

Usually, a join line between the fabrics is prone to function as a propagation path of a crack if another component collides at a high speed. However, according to the above-described structure, every join line J extends in the circumferential direction. Hence the crack hardly propagates thereon even if another component collides at a high speed. Thus, the component is effectively prevented from penetration. Moreover, a layer of the continuous fabric is located adjacent to a position where the join line J extends on a certain layer, whereby this structure is reinforced by the continuous fabric. Hence resistance to impact is further enhanced. A cylindrical structure having a relatively large axial length can be manufactured even by use of relatively narrow fabrics, and a sufficient impact energy absorbing capacity can still be expected in this case.

The manufacturing method and the product described above are also applicable to other cylindrical structures besides the fan case. For example, the method and product are applicable to a component for covering a propulsion system in the aerospace field, or to a motor case of a rocket engine in particular. Without limitation to the propulsion system, the method and product are also applicable to various machine components aimed at resisting impact.

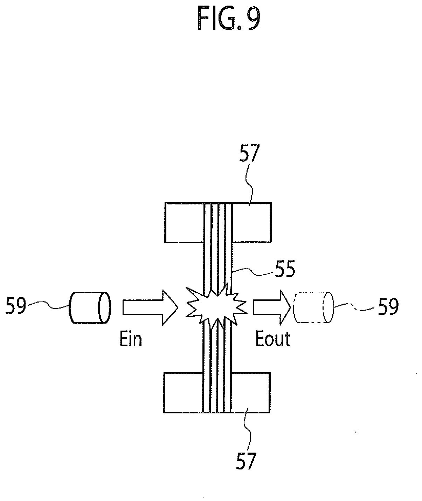

An impact energy absorption test has been carried out in order to evaluate the effect of the embodiment. Fig. 9 is a schematic diagram showing the test. A test piece 55 is fixedly supported with clamps 57 and a steel bullet 59 is fired perpendicularly on a surface of the sample 55 by using a hunting gun. The bullet 59 is captured with a high-speed camera from a point before impact to a point after penetration. Values Eᵢₙ and Eₒᵤₜ of kinetic energy of the bullet before and after the impact are calculated by measuring velocities Vᵢₙ and Vₒᵤₜ of the bullet 59 before and after the impact. Then, absorbed energy E_{ab} is derived from a formula E_{ab} = Eᵢₙ-Eₒᵤₜ.

All test pieces used in the test are formed by laminating fabrics in 56 layers. One of the test pieces includes no join lines. Another one includes join lines on 12 layers out of 56 layers (a proportion of inclusion of the join lines is equal to 21%) in a region of impact of the bullet. Still another one includes join lines on 37 layers out of 56 layers (a proportion of inclusion of the join lines is equal to -66%) in the region of impact of the bullet.

The absorbed energy E_{ab} of the test piece including the join lines on 12 layers in the region of impact of the bullet is equal to 96% of the absorbed energy of the test piece with no join lines. Similarly, the absorbed energy E_{ab} of the test piece including the join lines on 37 layers in the region of impact of the bullet is equal to 84%. In any case, it is confirmed that the energy absorbing function is not significantly deteriorated as compared to the test piece with no join lines.

Although the present invention has been described with reference to a preferred embodiment, it is to be understood that the present invention is not limited only to the embodiment. A person with ordinary skill in the art can embody the present invention by modifying and changing the embodiment based on the contents disclosed above without departing from the scope of the appended claims.

### INDUSTRIAL APPLICABILITY

The invention enables manufacture of a cylindrical structure such as a fan case or a motor case, which has a sufficient impact energy absorbing capacity, by using relatively narrow fabrics.

## Claims

1. A method for manufacturing a cylindrical structure (49) having an axial direction, comprising:
winding a first layer (51) around a mandrel (7), the first layer including a plurality of fabrics (25) each made of fibers, the fabrics (25) forming a first join line (J) extending in a circumferential direction with edges of the fabrics in contact with each other;
winding a second layer (51) around the first layer, the second layer including a plurality of fabrics each made of the fibers, the fabrics forming a second join line (J) extending in the circumferential direction with edges of the fabrics in contact with each other, in such a manner as to displace the second join line from the first join line in the axial direction;
winding a third layer (51) around the second layer, the third layer including a plurality of fabrics each made of the fibers, the fabrics forming a third join line (J) extending in the circumferential direction with edges of the fabrics in contact with each other, in such a manner as to displace the third join line from both of the first join line and the second join line in the axial direction; and
joining the layers together by using a resin.

2. The method of claim 1, further comprising:
winding a roving (53) around any one selected from the group consisting of the mandrel, the first layer, the second layer, and the third layer.

3. The method of claim 1, wherein the fabrics (25) are impregnated with the resin in advance.

4. The method of claim 2, wherein the roving (53) is impregnated with the resin in advance.

5. The method of claim 1, further comprising:
impregnating the first layer, the second layer, and the third layer with the resin.

6. A cylindrical structure (49) having an axial direction, comprising:
a first layer (51) including a plurality of fabrics (25) each made of fibers, the fabrics forming a first join line (J) extending in a circumferential direction with edges of the fabrics in contact with each other;
a second layer (51) including a plurality of fabrics (25) each made of fibers, the fabrics forming a second join line (J) extending in the circumferential direction with edges of the fabrics in contact with each other, the second layer wound around the first layer in such a manner as to displace the second join line from the first join line in the axial direction;
a third layer (51) including a plurality of fabrics each made of fibers, the fabrics forming a third join line (J) extending in the circumferential direction with edges of the fabrics in contact with each other, the third layer wound around the second layer in such a manner as to displace the third join line from both of the first join line and the second join line in the axial direction; and
a resin joining the layers together.

7. The cylindrical structure of claim 6 further comprising:
a roving wound (53) around any of positions on an inner surface of the first layer, between the first layer and the second layer, between the second layer and the third layer, and on an outer surface of the third layer.

## Patentansprüche

1. Verfahren zum Herstellen einer zylinderförmigen Struktur (49), welche eine axiale Richtung aufweist, umfassend:
Wickeln einer ersten Schicht (51) um eine Spindel (7), wobei die erste Schicht eine Mehrzahl von Geweben (25) umfasst, die jeweils aus Fasern bestehen, wobei die Gewebe (25) eine erste Verbindungslinie (J) bilden, die sich in einer Umfangsrichtung erstreckt, wobei Ränder der Gewebe sich miteinander berühren;
Wickeln einer zweiten Schicht (51) um die erste Schicht, wobei die zweite Schicht eine Mehrzahl von Geweben umfasst, die jeweils aus den Fasern bestehen, wobei die Gewebe eine zweite Verbindungslinie (J) bilden, die sich in der Umfangsrichtung erstreckt, wobei Ränder der Gewebe sich so miteinander berühren, dass die zweite Verbindungslinie von der ersten Verbindungslinie in der axialen Richtung verschoben wird;
Wickeln einer dritten Schicht (51) um die zweite Schicht, wobei die dritte Schicht eine Mehrzahl von Geweben umfasst, die jeweils aus den Fasern bestehen, wobei die Gewebe eine dritte Verbindungslinie (J) bilden, die sich in der Umfangsrichtung erstreckt, wobei Ränder der Gewebe sich so miteinander berühren, dass die dritte Verbindungslinie sowohl von der ersten Verbindungslinie als auch von der zweiten Verbindungslinie in der axialen Richtung verschoben wird; und
Miteinanderverbinden der Schichten durch Verwendung eines Harzes.

2. Verfahren nach Anspruch 1, ferner umfassend:
Wickeln eines Vorgarns (53) um irgendeine ausgewählt aus der Gruppe bestehend aus der Spindel, der ersten Schicht, der zweiten Schicht und der dritten Schicht.

3. Verfahren nach Anspruch 1, wobei die Gewebe (25) im vorab mit dem Harz imprägniert werden.

4. Verfahren nach Anspruch 2, wobei das Vorgarn (53) im vorab mit dem Harz imprägniert wird.

5. Verfahren nach Anspruch 1, ferner umfassend:
Imprägnieren der ersten Schicht, der zweiten Schicht und der dritten Schicht mit dem Harz.

6. Zylinderförmige Struktur (49), welche eine axiale Richtung aufweist, umfassend:
eine erste Schicht (51), die eine Mehrzahl von Geweben (25) umfasst, die jeweils aus Fasern bestehen, wobei die Gewebe eine erste Verbindungslinie (J) bilden, die sich in einer Umfangsrichtung erstreckt, wobei Ränder der Gewebe sich miteinander berühren;
eine zweite Schicht (51), die eine Mehrzahl von Geweben (25) umfasst, die jeweils aus Fasern bestehen, wobei die Gewebe eine zweite Verbindungslinie (J) bilden, die sich in der Umfangsrichtung erstreckt, wobei Ränder der Gewebe sich so miteinander berühren, wobei die zweite Schicht so um die erste Schicht gewickelt ist, dass die zweite Verbindungslinie von der ersten Verbindungslinie in der axialen Richtung verschoben wird;
eine dritte Schicht (51), die eine Mehrzahl von Geweben umfasst, die jeweils aus Fasern bestehen, wobei die Gewebe eine dritte Verbindungslinie (J) bilden, die sich in der Umfangsrichtung erstreckt, wobei die Ränder der Gewebe sich miteinander berühren, wobei die dritte Schicht um die zweite Schicht so gewickelt ist, dass die dritte Verbindungslinie sowohl von der ersten Verbindungslinie als auch von der zweiten Verbindungslinie in der axialen Richtung verschoben wird; und
ein Harz, welches die Schichten miteinander verbindet.

7. Zylinderförmige Struktur nach Anspruch 6, ferner umfassend:
ein Vorgarn (53), welches um irgendeine Position auf einer Innenfläche der ersten Schicht zwischen der ersten Schicht und der zweiten Schicht, zwischen der zweiten Schicht und der dritten Schicht und auf einer äußeren Fläche der dritten Schicht gewickelt ist.

## Revendications

1. Procédé pour fabriquer une structure cylindrique (49) qui présente une direction axiale, comprenant :
l'enroulement d'une première couche (51) autour d'un mandrin (7), la première couche incluant une pluralité de matières textiles (25) dont chacune est constituée par des fibres, les matières textiles (25) formant une première ligne de jonction (J) qui s'étend dans une direction circonférentielle, des bords des matières textiles étant en contact les uns avec les autres ;
l'enroulement d'une deuxième couche (51) autour de la première couche, la deuxième couche incluant une pluralité de matières textiles dont chacune est constituée par des fibres, les matières textiles formant une deuxième ligne de jonction (J) qui s'étend dans la direction circonférentielle, des bords des matières textiles étant en contact les uns avec les autres, de manière à déplacer la deuxième ligne de jonction à partir de la première ligne de jonction dans la direction axiale ;
l'enroulement d'une troisième couche (51) autour de la deuxième couche, la troisième couche incluant une pluralité de matières textiles dont chacune est constituée par des fibres, les matières textiles formant une troisième ligne de jonction (J) qui s'étend dans la direction circonférentielle, des bords des matières textiles étant en contact les uns avec les autres, de manière à déplacer la troisième ligne de jonction à partir à la fois de la première ligne de jonction et de la deuxième ligne de jonction dans la direction axiale ; et
la jonction des couches ensemble en utilisant une résine.

2. Procédé selon la revendication 1, comprenant en outre :
l'enroulement d'un roving (53) autour d'une entité réceptrice quelconque qui est sélectionnée parmi le groupe qui est constitué par le mandrin, la première couche, la deuxième couche et la troisième couche.

3. Procédé selon la revendication 1, dans lequel les matières textiles (25) sont imprégnées de la résine à l'avance.

4. Procédé selon la revendication 2, dans lequel le roving (53) est imprégné de la résine à l'avance.

5. Procédé selon la revendication 1, comprenant en outre :
l'imprégnation de la première couche, de la deuxième couche et de la troisième couche avec la résine.

6. Structure cylindrique (49) présentant une direction axiale, comprenant :
une première couche (51) qui inclut une pluralité de matières textiles (25) dont chacune est constituée par des fibres, les matières textiles formant une première ligne de jonction (J) qui s'étend dans une direction circonférentielle, des bords des matières textiles étant en contact les uns avec les autres ;
une deuxième couche (51) qui inclut une pluralité de matières textiles (25) dont chacune est constituée par des fibres, les matières textiles formant une deuxième ligne de jonction (J) qui s'étend dans la direction circonférentielle, des bords des matières textiles étant en contact les uns avec les autres, la deuxième couche étant enroulée autour de la première couche de manière à déplacer la deuxième ligne de jonction à partir de la première ligne de jonction dans la direction axiale ;
une troisième couche (51) qui inclut une pluralité de matières textiles dont chacune est constituée par des fibres, les matières textiles formant une troisième ligne de jonction (J) qui s'étend dans la direction circonférentielle, des bords des matières textiles étant en contact les uns avec les autres, la troisième couche étant enroulée autour de la deuxième couche de manière à déplacer la troisième ligne de jonction à partir à la fois de la première ligne de jonction et de la deuxième ligne de jonction dans la direction axiale ; et
une résine qui joint les couches ensemble.

7. Structure cylindrique selon la revendication 6, comprenant en outre :
un roving (53) qui est enroulé autour de n'importe quelle position prise parmi sur une surface interne de la première couche, entre la première couche et la deuxième couche, entre la deuxième couche et la troisième couche et sur une surface externe de la troisième couche.
